# EUROPEAN PATENT APPLICATION

(11) **EP 2 324 708 A1**
(43) Date of publication of application: **25.05.2011**
(21) Application number: 10192262.3
(22) Date of filing: 23.11.2010
(51) Int. Cl.: A01N 25/34, E06B 9/52

(54) **Device for repelling insects**

(30) Priority: 23.11.2009 NL 1037489
(71) Applicant: Dutch Premium Group B.V., 5721 GJ Asten (NL)
(72) Inventor: Roelofs, Rudolfus Hubertus Helena Johannes, 5721 GJ, ASTEN (NL); Van Thiel, Paul-Maarten Joannes Henricus, 5708 DL, HELMOND (NL)
(74) Representative: Algemeen Octrooi- en Merkenbureau

(57) **Abstract**

The invention relates to a device for repelling insects so as to prevent said insects from entering a particular space.

It is generally known that flies, mosquitoes and other flying insects are bothersome and irritating, especially when they enter rooms and houses via open windows and doors. Such flying insects are unhygienic since they generally carry and therefore spread germs.

To fight such insect plagues, drastic means such as fly swatters and pesticides are often used. Apart from the animal-unfriendly nature of such means, in particular the use of pesticides also constitute a serious national health hazard.

Accordingly it is an object of the invention to provide an insect-friendly means for repelling germ-carrying insects so as to prevent said insects from entering a particular space. Think in this regard of open doors and windows of kitchens or nurseries, for example.

## Description

The invention relates to a device for repelling insects so as to prevent said insects from entering a particular space.

It is generally known that flies, mosquitoes and other flying insects are bothersome and irritating, especially when they enter rooms and houses via open windows and doors. Such flying insects are unhygienic since they generally carry and therefore spread germs. To fight such insect plagues, drastic means such as fly swatters and pesticides are often used. Apart from the animal-unfriendly nature of such means, in particular the use of pesticides also constitute a serious national health hazard.

Accordingly it is an object of the invention to provide an insect-friendly means for repelling germ-carrying insects so as to prevent said insects from entering a particular space. Think in this regard of open doors and windows of kitchens or nurseries, for example.

According to the invention, the device is to that end **characterised in that** it comprises an envelope made of a material which is substantially transparent to the visible light, which envelope is suitable for containing a particular amount of a liquid which is substantially transparent to the visible light.

Experiments have shown that the light incident on such a liquid-filled envelope is scattered to such an extent by the infraction of the light that flying insects approaching the envelope will become disoriented and thus keep clear of the direct vicinity of the location where the device is disposed.

Thus it is possible, using the device according to the invention, to protect particular spaces such as kitchens or nurseries against the entry of insects in an effective and animal-friendly manner. As is generally known, insects have compound eyes capable of perceiving things from several directions simultaneously. On account of the specific light refraction of the light incident on the liquid-filled envelope, a disorienting light refraction profile is created round the device, which acts to repel the flying insects that are present near or come near the device.

According to another aspect of the invention, the invention is **characterised in that** the envelope is elongated in shape, whilst the envelope is in particular tubular in shape.

According to the invention, in order to be able to install the device according to the invention in a simple manner at the location of a space to be protected from insects, at least part of the outer surface of the envelope is flat in order to enable installation thereof on a flat surface.

The device may be provided with means of attachment for being attached to a surface. More specifically, said means of attachment may comprise an adhesive, for example in the form of an adhesive strip. This makes it possible to glue the repelling device to a casing, for example, at the location of a window that is to be protected against flying insects.

According to another embodiment, the envelope can be closed at a first end thereof, so that it can be easily filled with a specific amount of a liquid that is substantially transparent to the visible light. Said liquid may be water, which may or may not be provided with an additive that prevents the liquid from getting turbid, for example due to algal growth.

According to another aspect, said first end is provided with a screw thread, which screw thread mates with the screw thread of a closing element. Said closing element may be a screw cap, for example.

More specifically, said first end is provided with an upright circumferential edge provided with said screw thread, onto which the closing element in the form of a screw cap can be screwed.

According to another aspect, the device can be installed at the location of an entrance to the space to be screened, for example a window or door casing.

The invention will now be explained in more detail with reference to a drawing, in which:
Figures 1a-1c are schematic views of an embodiment of a device according to the invention;
Figure 2 shows an application of a device according to the invention.

For a better understanding of the invention, like parts will be indicated by the same numerals in the description of the figures below and in the various figures.

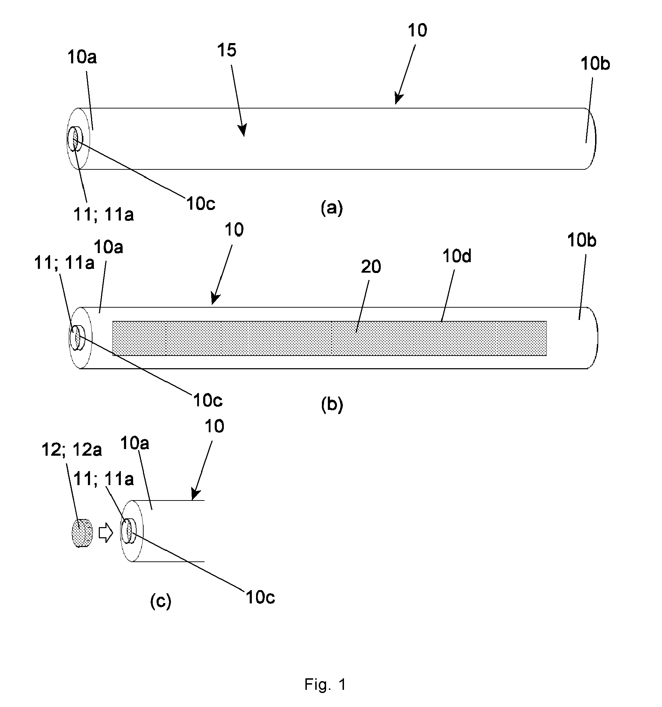

In figures 1a-1c, numeral 10 indicates an embodiment of the device according to the invention for repelling insects. The device 10 is very suitable for repelling insects so as to prevents said (mainly flying) insects from entering a particular space. Think in this regard of spaces where food is stored (such as a kitchen) or where persons are present (such as bedrooms, in particular baby rooms or nurseries).

The device 10 is configured as an envelope having a first end 10a and a second end 10b. The envelope can be filled with a liquid that is substantially transparent to the visible light, such as water. Accordingly, the material of the envelope is also made of a material that is substantially transparent to the visible light. Think in this regard of a plastic material which on the one hand is easy to process but which on the other hand is also sufficiently stiff and strong, which makes it easier to handle the device 10 upon installation of the device at the location of the space to be protected against the entry of insects.

The envelope 10 is to that end provided with an opening 10c on a first side, which opening can be closed, for example by means of a closing element 12 (figure 1c).

In a specific embodiment, the closing element is a screw cap provided with an internal screw thread 12a which can mate with an external screw thread 11a provided on an upright circumferential edge 11 which extends around the opening 10c to be closed.

It is preferable to fill at most 75-80% of the volume of the envelope 10 with a liquid 15 that is transparent to the visible light, preferably water.

In order to realise an additional dazzle and consequently an additional disorienting effect, additives that effect an additional dazzle may be added to the liquid. Said additives may be flocculent or wafer-thin particles, for example, which are suspended in the liquid. Think in this regard of metal chips or other types of materials which can be added to the liquid in the form of granules or pellets and which, as a result of being suspended in the liquid, can provide an additional dazzle and consequently create a disorienting effect in the insects' compound eyes.

Since the device 10 will be exposed to sunlight for a prolonged period of time, it is preferable to add to the liquid 15 one or more agents that prevent the liquid from getting turbid and/or algal growth in the liquid.

The envelope 10 is preferably tubular in shape, so that the round spherical shape of the outer surface will effect such a light refraction of the sunlight incident on the envelope 10 through the liquid 15 that said light refraction will have a disorienting effect on the compound eyes of the flying insects present in the direct vicinity of the device 10. As a result of said disorienting effect on the flying insects' compound eyes, said insects will keep clear of the direct vicinity of the device 10. In this way it is possible to realise a effective screening of a space, so that the aforesaid flying insects will no longer enter said space.

In one embodiment, at least part of the outer surface of the device or the envelope 10 may be flat, so that an effective, stable attachment to a flat surface will be possible.

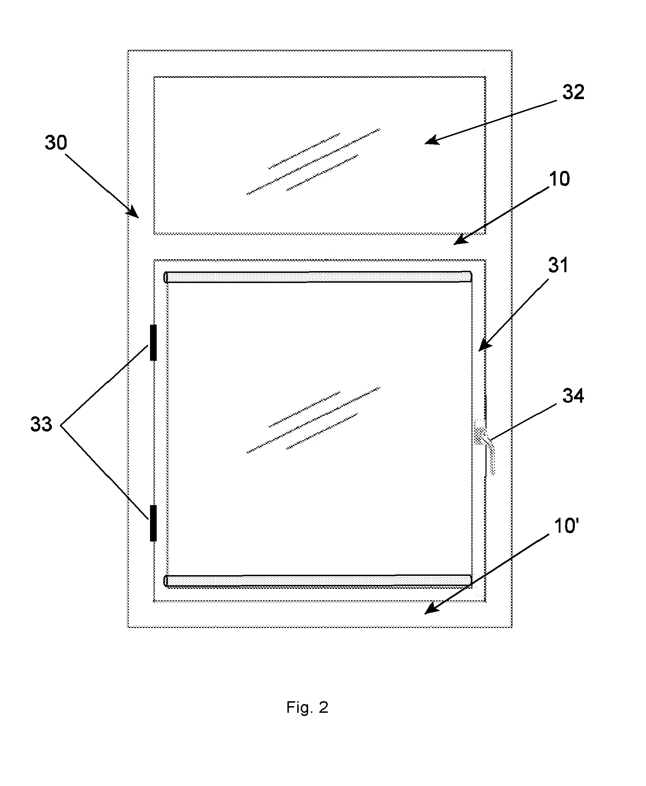

This embodiment is shown in figure 1b, in which the envelope 10 has a flat part 10d, which is provided with adhesives 20. Said adhesives may be in the form of an adhesive strip, for example, which makes it possible to attach the envelope to, for example, a window or door casing, as is shown in figure 2.

Numeral 30 in figure 2 indicates a casing made up of a casement window 31 that can swing open and a closed upper window 32. The window 31 can be swung open via the hinges 33 and the handle 34. To prevent insects from entering the room when the window is open, a device 10 is according to the invention attached to the casing 30, for example by means of the adhesive strip 20 as shown in figure 1b. More specifically, the device is to be mounted within the casing 30, so that the window 31 can also be closed. A second device 10' according to the invention may be installed near the bottom side of the open casement window 31 for additional protection, so as to thus realise a more effective screening and to disorient and repel the approaching flying insects through light refraction.

The device 10 may be provided with suspension eyes (not shown), which function as means of attachment, so that the device can be screwed (possibly in a vertical position) to the casing 30 by means of hooked screws.

Additional disorienting effects can be realised by incorporating or pressing materials that create a dazzling effect, such as aluminium foil or iron particles or a teflon material, in(to) the plastic material of the envelope 10.

Likewise, a grid or other pattern can be printed or provided in the plastic material of the envelope 10, in which pattern or motive (for example a honeycomb structure) other materials can be incorporated, such as iron, aluminium, teflon, etc.

Although essentially a tubular envelope having a cylindrical shape is discussed in the description of the figures, it will be understood that also other model variants can be suitable. For example, the elongated envelope 10 may be square, triangular, pentagonal, hexagonal or heptagonal, as a result of which not only a varied light-refracting effect is realised, but also, on account of the flat surface, the envelope can be more easily placed on or attached to a flat surface.

Although it is proposed in the description to attach the tubular envelope to a casing, it is also possible to click it into a support or stand, which can subsequently be disposed at the location of the space to be screened. Also other suspension systems, such as clamps or adhesives, can be used.

Lighting means may be incorporated in the tubular envelope to provide an additional disorienting effect, which lighting means, when used in specific colour combinations, can have a disorienting effect on the insects' compound eyes. Said lighting means may comprise an LED light fixture, for example, which is capable of emitting blue light or various shades of blue light as special colour effects.

Likewise, other reflecting elements may be incorporated in the tubular material.

In another embodiment (not shown), the tubular envelope may be divided into several compartments, which may be filled with different liquids which may or may not be provided with different additives having a disorienting effect on the insects' compound eyes.

It is further noted that, for installation reasons, the tubular envelope may have a stiffened edge provided with a stiffening strip, which may or may not be provided with openings via which the tubular envelope can be fastened to the casing by means of a nail or screw.

It will furthermore be understood that the tubular envelope may be made of all kinds of plastic materials, so that recycling will be possible. If desired, decomposable plastics may be used.

## Claims

1. A device for repelling insects so as to prevent said insects from entering a particular space, said device comprising an envelope made of a material which is substantially transparent to the visible light, which envelope is suitable for containing a particular amount of a liquid which is substantially transparent to the visible light.

2. A device according to claim 1, **characterised in that** the envelope is elongated in shape.

3. A device according to claim 1 or 2, **characterised in that** the envelope is tubular in shape.

4. A device according to one or more of the preceding claims, **characterised in that** at least part of the outer surface of the envelope is flat in order to enable installation thereof on a flat surface.

5. A device according to one or more of the preceding claims, **characterised in that** the device is provided with means of attachment for being attached to a surface.

6. A device according to claim 5, **characterised in that** said means of attachment comprise an adhesive.

7. A device according to claim 5 or 6, **characterised in that** said means of attachment are in the form of an adhesive strip.

8. A device according to one or more of the preceding claims, **characterised in that** the envelope can be closed at a first end thereof.

9. A device according to claim 8, **characterised in that** said first end is provided with a screw thread, which screw thread mates with the screw thread of a closing element.

10. A device according to claim 9, **characterised in that** said first end is provided with an upright circumferential edge provided with said screw thread.

11. A device according to one or more of the preceding claims, **characterised in that** the device can be installed at the location of an entrance to the space to be screened, for example a window or door casing.
